(19) Europäisches Patentamt
European Patent Office
Office européen des brevets

(11) EP 2 168 912 B1

(12) # EUROPÄISCHE PATENTSCHRIFT

(45) Veröffentlichungstag und Bekanntmachung des Hinweises auf die Patenterteilung:
**27.05.2015 Patentblatt 2015/22**

(51) Int Cl.:
***C01B 3/38*** (2006.01) ***H01M 8/06*** (2006.01)

(21) Anmeldenummer: **09011962.9**

(22) Anmeldetag: **19.09.2009**

(54) **Verfahren zum Betreiben von Brennstoffzellensystem mit Reformern bei Flüssiggas-Luft-Beimischung**

Method for operating a fuel cell system with reformers for liquid gas-air admixture

Procédé de fonctionnement d'un système de cellules combustibles doté de réformateurs dans un mélange gaz liquide-air

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.09.2008 AT 15132008**

(43) Veröffentlichungstag der Anmeldung:
**31.03.2010 Patentblatt 2010/13**

(73) Patentinhaber: **Vaillant GmbH**
**42859 Remscheid (DE)**

(72) Erfinder: **Badenhop, Thomas**
**51688 Wipperfürth (DE)**

(74) Vertreter: **Hocker, Thomas**
**Vaillant GmbH**
**Berghauser Strasse 40**
**42859 Remscheid (DE)**

(56) Entgegenhaltungen:
**EP-A1- 1 905 736**
**EP-A2- 1 361 621**
**DE-A1- 10 360 031**
**US-A1- 2007 180 769**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 168 912 B1

## Beschreibung

Die Erfindung bezieht sich auf ein Verfahren zum Betreiben von Brennstoffzellensystemen mit katalysatorhaltigen Reformern zur Umwandlung von Erdgas in wasserstoffreiches Prozessgas, wobei das Erdgas Anteile von Flüssiggas-Luft-Gemischen enthalten kann.

Brennstoffzellen benötigen Wasserstoff für die elektrochemische Reaktion. Da Wasserstoff in der Natur nicht in nennenswerten Konzentrationen vorkommt, muss er entweder mittels Elektrolyse aus Wasser oder mittels Reformierung aus Kohlenwasserstoffen hergestellt werden.

Erdgas besteht im überwiegenden Teil aus Methan $CH_4$. In Anwesenheit eines Katalysators kann Methan $CH_4$ mit Sauerstoff $O_2$ exotherm partiell oxydiert werden.

$$CH_4 + O_2 \xrightarrow{-319\frac{kJ}{mol}} CO_2 + 2H_2$$

Hierbei wird Wärme frei. Wasserstoff $H_2$ kann auch in einem endothermen Prozess aus Methan mit Wasserdampf $H_2O$ dampfreformiert werden. Dies geschieht meist in zwei Stufen. In der ersten Stufe reagieren Methan $CH_4$ und Wasserdampf $H_2O$ zu Kohlenmonoxyd $CO$ und Wasserstoff $H_2$

$$CH_4 + H_2O \xrightarrow{+207\frac{kJ}{mol}} CO + 3H_2$$

In einem weiteren Reformierungsschritt wird das Kohlenmonoxyd CO mit weiterem Wasserdampf $H_2O$ zu Kohlendioxyd $CO_2$ und Wasserstoff $H_2$ weiterverarbeitet

$$CO + H_2O \xrightarrow{-41\frac{kJ}{mol}} CO_2 + H_2$$

Somit ergibt sich für die Dampfreformierung in der Summe die Bilanz

$$CH_4 + 2H_2O \xrightarrow{+166\frac{kJ}{mol}} CO_2 + 4H_2$$

Zur Aufrechterhaltung dieser Reaktion ist die Zufuhr von Wärme notwendig.

Da bei der partiellen Oxidation Wärme frei wird, während bei der Dampfreformierung Wärme zur Aufrechterhaltung der Reaktion benötigt wird, kommen bei so genannten autothermen Reformern beide Reaktionen zum Einsatz, so dass die Reaktionstemperatur ohne die Zufuhr beziehungsweise Abfuhr großer Wärmemengen auf einem bestimmten Niveau gehalten werden kann.

US2007/0180769 offenbart die Regelung des Betriebs eines katalytischen Reformers anhand von Sauerstoffsensoren im Produktgasstrom.

Erdgas besteht nicht nur aus Methan $CH_4$, sondern auch anderen Kohlenwasserstoffen $C_nH_m$. Die Erdgasversorger koordinieren ihre Erdgaslieferungen derartig, dass die Versorgung mit reinem Erdgas fast stets bedarfsgerecht gewährleistet ist. Entstehen besondere Spitzen an Erdgasbedarf, so besteht die Möglichkeit, dass dem Erdgas ein Flüssiggas-Luft-Gemisch zugemischt wird. Zumeist wird ein Gemisch aus Propan und Luft beigemischt. Die gesetzliche

Anforderung hierzu ist beispielsweise im Deutschen Arbeitsblatt DVGW G 260 geregelt. Darin ist festgelegt, dass der Sauerstoffgehalt des Erdgases inklusive Propan-Luftbeimischung 7 Vol.-% nicht überschreiten darf.

Propan reagiert sowohl mit Sauerstoff $O_2$ als auch mit Wasserdampf $H_2O$ im Reformer zu Kohlendioxyd $CO_2$ und Wasserstoff $H_2$.

$$C_3H_8 + 3O_2 \rightarrow 3CO_2 + 4H_2$$

$$C_3H_8 + 6H_2O \rightarrow 3CO_2 + 10H_2$$

Die Erdgasreformer von Brennstoffzellensystemen sind derartig konzipiert, dass sich beim Betrieb eine bestimmt Temperatur einstellt. Bei dieser Temperatur ist der Umsatz optimal. Gelangt nun zusätzlicher Sauerstoff in den Reformer, so wird die katalytische Reaktion im Reformer beschleunigt, und die Reaktionstemperatur erhöht sich. Hierdurch kann der Katalysator beschädigt werden. Einerseits kann die Temperatur derartig weit ansteigen, dass der Wash-Coat, auf welchem der Katalysator aufgebracht ist, sich umwandelt und die Oberfläche dadurch drastisch reduziert wird. Andererseits können auch Bauteile derartig heiß werden, dass sie schmelzen und somit zerstört werden.

Erdgas wird in öffentlichen Versorgungssystemen ein Odorierungsmittel zugesetzt, damit Leckagen am Auftreten des Geruchs des Odorierungsmittels erkannt werden können. Als Odorierungsmittel wird häufig Tetrahydrothiophen (THT, $C_3H_8S$) beigefügt. Weitere Odorierungsmittel sind Isopropylmercaptan, Tertiärbutylmercaptan, Ethylmercaptan und sowie Di-Methyl-Sulfid (DMS). Darüber hinaus enthält Erdgas als natürliche schwefelhaltige Begleitstoffe in geringen Konzentrationen Schwefelwasserstoff, Kohlenstoffoxidsulfid, Schwefelkohlenstoff und Mercaptane sowie Di-Methyl-Sulfid.

Sowohl Brennstoffzellen, als auch Reformer enthalten Katalysatoren, welche durch Schwefelverbindungen irreversibel vergiftet werden können.

Daher muss der Schwefel aus Erdgas entfernt werden bevor das Brenngas in den Reformer von Brennstoffzellen eingeleitet wird. Hierzu kann der Schwefel einerseits in Adsorptionsmitteln gebunden werden. Diese Adsorptionsmittel beanspruchen relativ viel Bauraum und binden meist nur bestimmte Schwefelverbindungen.

Eine andere Möglichkeit der Schwefelentfernung aus Erdgas besteht in Form der Heißgasentfernung. Hierzu wird das zu entschwefelnde Erdgas auf 300 bis 600°C erhitzt und zusammen mit Wasserstoff oder einem wasserstoffhaltigen Gas über einen Katalysator geleitet. Hierbei wird der Schwefel zu Schwefelwasserstoff gebunden.

$$-S- + H_2 \rightarrow H_2S$$

Der so entstandene Schwefelwasserstoff kann dann adsorptiv beispielsweise an einem Zinkoxid-Festbett entfernt werden.

Enthält das zu entbindende Erdgas Sauerstoff, so findet bindet der Sauerstoff in einer ungewünschten Nebenreaktion Wasserstoff.

$$H_2 + \frac{1}{2}O_2 \rightarrow H_2O$$

Diese Reaktion bindet eine Teil des für die Heißgasentschwefelung benötigten Wasserstoffs, so dass die folgenden chemischen Reaktionen darunter leiden. Es könnte auch die ungewünschte Rückreaktion in Gegenwart von Sauerstoff eintreten wie zum Beispiel die Desorption von Schwefel

$$ZnS + \frac{1}{2}O_2 \rightarrow ZnO + -S-$$

Aufgabe der vorliegenden Erfindung ist es daher, einen einwandfreien Betrieb des Reformers und gegebenenfalls einer Entschwefelung auch bei Flüssiggas-Luft-Beimischung zum Erdgas zu gewährleisten und eine Beschädigung des Reformers und der Brennstoffzelle zu vermeiden.

Erfindungsgemäß wird dies mit einem Verfahren zum Betreiben von Brennstoffzellensystemen mit katalysatorhaltigen Reformern zur Umwandlung von Erdgas in wasserstoffreiches Prozessgas, wobei das Erdgas Anteile von Flüssiggas-Luft-Gemischen enthalten kann, dadurch erreicht, dass in der Erdgaszuführleitung ein Sauerstoffsensor angeordnet ist. Dieser ist mit einer Regelung verbunden, welche in Abhängigkeit des Signals des Sauerstoffsensors die

Luftmenge durch die Luftzuführleitung, die Wassermenge durch die Wasserzuführleitung und / oder die Erdgasmenge durch die Erdgaszuführleitung steuert oder regelt.

Gemäß den Merkmalen des abhängigen Verfahrensanspruchs 2 kann zur Regelung der Luftmenge durch die Luftzuführleitung die Drehzahl eines Motors eines Gebläses bzw. Kompressors oder der Querschnitt eines Drosselventils verändert werden.

Analog hierzu kann gemäß den Merkmalen des abhängigen Verfahrensanspruchs 3 die Wassermenge durch Verändern der Drehzahl des Motors einer Pumpe oder der Drosselquerschnitt in der Leitung verändert werden.

Gemäß den Merkmalen des abhängigen Verfahrensanspruchs 4 kann zur Regelung der Erdgasmenge durch die Erdgaszuführleitung die Drehzahl eines Motors eines Kompressors oder der Querschnitt eines Drosselventils verändert werden.

Gemäß den Merkmalen des abhängigen Verfahrensanspruchs 5 wird in dem Fall, in dem dem Reformer sowohl Wasser als auch Luft zugeführt wird, bei Flüssiggas-Luft-Zumischung zunächst die Luftmenge durch die Luftzuführleitung reduziert und erst in dem Fall, in dem die Luftzufuhr völlig eingestellt ist, die Wassermenge reduziert. Hierdurch ergibt sich der Vorteil, dass eine reine Sauerstoffsubstitution stattfindet.

Alternativ hierzu kann gemäß den Merkmalen des abhängigen Verfahrensanspruchs 6 sowohl die Zufuhr von Wasser als auch die Zufuhr von Luft und Erdgas verändert werden, um die Prozesstemperatur im Reformer stabil zu halten.

Gemäß den Merkmalen des abhängigen Anspruchs 7 handelt es sich bei dem Sauerstoffsensor um eine Nernstsonde.

Entsprechend den Merkmalen des abhängigen Anspruchs 7 wird in dem Fall, in dem eine Heißgasentschwefelung mit Zuführung von wasserstoffhaltigem Gas in der Erdgaszuführleitung angeordnet ist, entsprechend dem Signal des Sauerstoffsensors der Anteil wasserstoffhaltigen Gases in die Zuführung der Heißgasentschwefelung angepasst.

Die Erfindung wird anhand der Figur erläutert.

Die Figur zeigt ein Brennstoffzellensystem mit einem katalysatorhaltigen Reformer 1 sowie einer Brennstoffzelle 2.

Der Reformer 1 verfügt über drei Eingänge. In einer Erdgaszuführleitung 6 befinden sich ein Kompressor 7 und ein Schwefelfilter 8. Unmittelbar vor dem Reformer 1 ist in der Erdgaszuführleitung 6 ein Sauerstoffsensor 9 angeordnet. Dieser Sauerstoffsensor 9 ist mit einer Regelung 10 verbunden. Parallel zur Erdgaszuführleitung 6 ist eine Luftzuführleitung 11, in der sich ein Gebläse 12 befindet, angeordnet. Das Gebläse 12 verfügt über einen Motor 13, welcher mit der Regelung 10 verbunden ist. Bei der dritten Eingangsleitung handelt es sich um eine Wasserzuführleitung 14, in der sich eine Pumpe 15 mit Motor 25 befindet. Der Motor 25 ist mit der Regelung 10 verbunden. Eine Wasserstoff führende Leitung 16 verbindet den Reformer 1 mit der Anode 3 und der Brennstoffzelle 2. Die Brennstoffzelle 2 verfügt neben der Anode 3 über eine Kathode 4 sowie eine ElektrolytMembran 5 zwischen Anode 3 und Kathode 4. Mit der Anode 3 und der Kathode 4 ist ferner ein elektrischer Verbraucher 24 verbunden. An der Anode 3, auf der der Wasserstoff führenden Leitung 16 abgewandten Seite befindet sich eine Anodenabgasleitung 17, welche zu einem Nachbrenner 19 führt. Der Nachbrenner 19 ist ferner mit einer Luftzuführleitung 18, als auch einer Abgasleitung 20 verbunden. Die Kathode 4 der Brennstoffzelle 2 ist einerseits eine Luftzuführleitung 21 mit Gebläse 22 als auch eine Kathodenabgasleitung 23 verbunden.

Anstelle des Schwefelfilters 8 kann auch eine Heißgasentschwefelung zum Einsatz kommen, bei der dem Aggregat neben Erdgas ein wasserstoffhaltiges Gas zugeführt wird. Das wasserstoffhaltige Gas wird in der Regel dem Reformerausgang entnommen.

Beim Betrieb des Brennstoffzellensystems wird Erdgas über die Erdgaszuführung 6 zu dem Kompressor 7 geleitet. Dieser verdichtet das Erdgas und drückt es über den Schwefelfilter 8, in dem das Erdgas von dem schwefelhaltigen Odorierungsmittel und natürlichen Schwefelbegleitstoffen befreit wird, zunächst zum Reformer 1. Mittels des Sauerstoffsensors 9 können Sauerstoffkonzentrationen im Erdgas festgestellt werden. Über die Luftzuführungsleitung 11 und das Gebläse 12 wird dem Reformer 1 Luft, welche Sauerstoff enthält, zugeführt. Ferner gelangt deionisiertes Wasser über die Wasserzuführleitung 14 und die Pumpe 15 in den Reformer 1. Die Erdgasmenge, Luftmenge als auch Wassermenge werden von der Regelung 10 derartig aufeinander abgestimmt, dass im Reformer 1 bedarfsgerecht wasserstoffreiches Prozessgas produziert wird. Dieses wasserstoffreiche Prozessgas gelangt vom Reformer 1 über die Wasserstoff führende Leitung 16 zur Anode 3 der Brennstoffzelle. In der Brennstoffzelle 2 findet die elektrochemische Reaktion statt. Auf der Anodenseite findet dabei eine anodische Teilreaktion (Oxydation) statt.

$$2H_2 \rightarrow 4H^+ + 4e^-$$

Die Protonen $H^+$ gelangen durch die Elektrolytmembran 5 zur Kathode 4, an welcher eine kathodische Teilreaktion (Reduktion) stattfindet

$$O_2 + 4e^- \rightarrow 2O^{2-}$$

$$4H^+ + 2O^{2-} \rightarrow 2H_2O$$

Hierbei wandern die korrespondierenden Elektronen über den elektrischen Verbraucher 24. Es handelt sich dabei in der Regel um einen elektrischen Konverter, welcher zur Einspeisung in ein elektrisches Netz dient. Der Wasserdampf, welcher in der Kathode 4 frei wird, wird über die Kathodenabgasleitung 23 abgeführt. Das nach wie vor wasserstoffhaltige Anodenabgas wird über die Anodenabgasleitung 17 zu dem Nachbrenner 19 geführt, wo es mit weiterem Luftsauerstoff verbrannt und anschließend über die Abgasleitung 20 aus dem System geleitet wird.

Detektiert der Sauerstoffsensor 9 Sauerstoff in der Erdgaszuführleitung 6, so gibt er diese Information an die Regelung 10 weiter. Die Regelung 10 errechnet aus dem Sauerstoffgehalt den mutmaßlichen Flüssiggasanteil, welcher sich aus den gesetzlichen Bestimmungen (z. B. Arbeitsblatt DVGW G 260) ergibt. Die Regelung 10 steuert sodann die Motoren 13, 25 des Gebläses 12, als auch der Pumpe 15, um die Reaktion im Reformer 1 anzupassen. Erhöht sich der Sauerstoffanteil im Erdgas, so wird dementsprechend die zugeführte Wasser- und/oder Luftmenge reduziert. Geht hingegen der Sauerstoffanteil im Erdgas zurück, so wird die Wasserzuführung und/oder Luftzuführung zum Reformer wieder erhöht.

Es ist ferner auch möglich, über eine Variation des Erdgasstroms die Reaktionen zu beeinflussen.

Erfindungsgemäß kann die Regulierung des Luft-, Wasser-, und/oder Erdgasstroms auch über entsprechende Drosselventile in der Luftzuführleitung 11 Wasserzuführleitung 14 und/oder Erdgaszuführleitung 6 erfolgen. Der Sauerstoffsensor 9 kann stromauf oder stromab des Schwefelfilters 8 angeordnet sein.

Kommt eine Heißgasentschwefelung anstelle des Schwefelfilters 8 zum Einsatz, so muss die Wasserstoffbindung durch den Sauerstoffanteil im Erdgas ausgeglichen werden. Dann wird die Einbringung von wasserstoffreichem Gas in das Heißgasentschwefelungsaggregat entsprechend bedarfsgerecht erhöht. Ist der Sauerstoffanteil im Erdgas bekannt, so kann der zusätzlich benötigte Wasserstoffbedarf berechnet werden. Bei der Heißgasentschwefelung sollte der Sauerstoffsensor 9 stromauf des Heißgasentschwefelungsaggregats angeordnet sein.

**Patentansprüche**

1. Verfahren zum Betreiben von Brennstoffzellensystemen mit katalysatorhaltigen Reformern (1) zur Umwandlung von Erdgas in wasserstoffreiches Prozessgas, bei dem eine Erdgaszuführleitung (6) sowie eine Luftzuführleitung (11) und / oder eine Wasserzuführleitung (14) stromauf des Reformers (1) angeordnet sind, wobei das Erdgas Anteile von Flüssiggas-Luft-Gemischen enthalten kann, **dadurch gekennzeichnet, dass** in einer Erdgaszuführleitung (6) ein Sauerstoffsensor (9), welcher mit einer Regelung (10) verbunden ist, angeordnet ist und die Regelung (10) die Luftmenge durch die Luftzuführleitung (11) und / oder die Wassermenge durch die Wasserzufuhrleitung (14) und / oder die Erdgasmenge durch die Erdgaszuführleitung (6) in Abhängigkeit des Signals des Sauerstoffsensors (9) steuert oder regelt.

2. Verfahren zum Betreiben von Brennstoffzellensystemen mit katalysatorhaltigen Reformern (1) nach Anspruch 1, **dadurch gekennzeichnet, dass** zur Regelung der Luftmenge durch die Luftzuführleitung (11) die Drehzahl eines Motors (13) eines Gebläses (12) beziehungsweise Kompressors oder der Querschnitt eines Drosselventils verändert wird.

3. Verfahren zum Betreiben von Brennstoffzellensystemen mit katalysatorhaltigen Reformern (1) nach Anspruch 1 oder 2, **dadurch gekennzeichnet, dass** zur Regelung der Wassermenge durch die Wasserzuführleitung (14) die Drehzahl eines Motors (25) einer Pumpe (15) oder der Querschnitt eines Drosselventils verändert wird.

4. Verfahren zum Betreiben von Brennstoffzellensystemen mit katalysatorhaltigen Reformern (1) nach Anspruch 1 bis 3, **dadurch gekennzeichnet, dass** zur Regelung der Erdgasmenge durch die Erdgaszuführleitung (6) die Drehzahl eines Motors (13) eines Kompressors (7) oder der Querschnitt eines Drosselventils verändert wird.

5. Verfahren zum Betreiben von Brennstoffzellensystemen mit katalysatorhaltigen Reformern (1) nach Anspruch 1 bis 4, **dadurch gekennzeichnet, dass** bei der Zufuhr von Wasser und Luft durch die Wasserzuführleitung (14) und die Luftzuführleitung (11) zum Reformer (1) zunächst die Luftmenge durch die Luftzuführleitung (11) reduziert wird und erst in dem Fall, indem die Luftzufuhr durch die die Luftzuführleitung (11) völlig eingestellt ist, die Wassermenge reduziert wird.

6. Verfahren zum Betreiben von Brennstoffzellensystemen mit katalysatorhaltigen Reformern (1) nach Anspruch 1 bis 4, **dadurch gekennzeichnet, dass** aus dem Signal des Sauerstoffsensors (9) der Flüssiggasanteil in der Erdgaszuführleitung (6) rechnerisch bestimmt wird und die Zufuhr von Wasser, Luft und Erdgas durch die Wasserzuführleitung (14), die Luftzuführleitung (11) und die Erdgaszuführleitung (6) zum Reformer (1) derart geregelt wird, dass die Prozesstemperatur im Reformer (1) sich nicht verändert.

7. Verfahren zum Betreiben von Brennstoffzellensystemen mit katalysatorhaltigen Reformern (1) nach Anspruch 1 bis 6, **dadurch gekennzeichnet, dass** der Sauerstoffsensor (9) eine Nernstsonde ist.

8. Verfahren zum Betreiben von Brennstoffzellensystemen mit katalysatorhaltigen Reformern (1) nach Anspruch 1 bis 7 wobei eine Heißgasentschwefelung mit Zuführung von wasserstoffhaltigem Gas in der Erdgaszuführleitung (6) angeordnet ist, **dadurch gekennzeichnet, dass** entsprechend dem Signal des Sauerstoffsensors (9) der Anteil wasserstoffhaltigen Gases in die Zuführung der Heißgasentschwefelung angepasst wird.

## Claims

1. Method to operate fuel cell systems having reformers (1) which contain catalysts for the conversion of natural gas into process gas which is rich in hydrogen, in which a natural gas supply line (6) as well as an air supply line (11) and / or a water supply line (14) are arranged upstream of the reformer (1), wherein the natural gas can contain proportions of liquefied natural gas and air mixtures, **characterised in that** an oxygen sensor (9) which is connected to a regulator (10) is arranged in a natural gas supply line (6) and the regulator (10) controls or regulates the quantity of air through the air supply line (11) and / or the quantity of water through the water supply line (14) and / or the quantity of natural gas through the natural gas supply line (6) depending on the signal of the oxygen sensor (9).

2. Method for the operation of fuel cell systems having reformers (1) which contain catalysts according to claim 1, **characterised in that** the rotational speed of a motor (13) of a fan (12) or a compressor or the cross-section of a throttle valve is changed to regulate the quantity of air through the air supply line (11).

3. Method for the operation of fuel cell systems having reformers (1) which contain catalysts according to claim 1 or 2, **characterised in that** the rotational speed of a motor (25) of a pump (15) or the cross-section of a throttle valve is changed to regulate the quantity of water through the water supply line (14)

4. Method for the operation of fuel cell systems having reformers (1) which contain catalysts according to claim 1 to 3, **characterised in that** the rotational speed of a motor (13) of a compressor (7) or the cross-section of a throttle valve is changed to regulate the quantity of natural gas through the natural gas supply line (6).

5. Method for the operation of fuel cell systems having reformers (1) which contain catalysts according to claim 1 to 4, **characterised in that** during the supply of water and air to the reformer (1) through the water supply line (14) and the air supply line (11), firstly the quantity of air through the air supply line (11) is reduced and only in the case in which the air supply through the air supply line (11) is completely adjusted is the water quantity reduced.

6. Method for the operation of fuel cell systems having reformers (1) which contain catalysts according to claim 1 to 4, **characterised in that** the liquefied natural gas proportion in the natural gas supply line (6) is determined mathematically from the signal of the oxygen sensor (9) and the supply of water, air and natural gas to the reformer (1) through the water supply line (14), the air supply line (11) and the natural gas supply line (6) is regulated in such a way that the process temperature in the reformer (1) does not change.

7. Method for the operation of fuel cell systems having reformers (1) which contain catalysts according to claim 1 to 6, **characterised in that** the oxygen sensor (9) is a Nernst probe.

8. Method for the operation of fuel cell systems having reformers (1) which contain catalysts according to claim 1 to 7, wherein a hot gas desulphurisation device having a supply of gas which contains hydrogen is arranged in the natural gas supply line (6), **characterised in that** the proportion of gas which contains hydrogen in the supply of the hot gas desulphurisation device is adapted according to the signal of the oxygen sensor (9).

## Revendications

1. Procédé d’actionnement de systèmes à cellules de combustible équipés de reformeurs (1) contenant le catalyseur,

destinés à transformer le gaz naturel en gaz industriel riche en hydrogène, selon lequel une conduite d'arrivée en gaz naturel (6) et une conduite d'arrivée en air (11) et/ou une conduite d'arrivée en eau (14) sont disposées en amont du reformeur (1), le gaz naturel pouvant contenir une proportion de mélange gaz liquide/air, **caractérisé en ce qu'**un capteur d'oxygène (9) relié à une commande (10) est disposé dans une conduite d'arrivée de gaz naturel (6) et **en ce que** la commande (10) pilote ou règle la quantité d'air à travers la conduite d'arrivée d'air (11) et/ou la quantité d'eau à travers la conduite d'arrivée d'eau (14) et/ou la quantité de gaz naturel à travers la conduite d'arrivée de gaz naturel (6) en fonction du signal du capteur d'oxygène (9).

**2.** Procédé d'actionnement de systèmes à cellules de combustible équipés de reformeurs (1) contenant un catalyseur selon la revendication 1, **caractérisé en ce que** la vitesse de rotation d'un moteur (13) d'un ventilateur (12) ou bien d'un compresseur ou de la section transversale d'une soupape d'étranglement est modifiée pour régler la quantité d'air à travers la conduite d'arrivée d'air (11).

**3.** Procédé d'actionnement de systèmes à cellules de combustible équipés de reformeurs(1) contenant un catalyseur selon l'une quelconque des revendications 1 ou 2, **caractérisé en ce que** la vitesse de rotation d'un moteur (25) d'une pompe (15) ou la section transversale d'une soupape d'étranglement est modifiée pour régler la quantité d'eau à travers la conduite d'arrivée d'eau (14).

**4.** Procédé d'actionnement de systèmes à cellules de combustible équipés de reformeurs (1) contenant un catalyseur selon l'une quelconque des revendications 1 à 3, **caractérisé en ce que** la vitesse de rotation d'un moteur (13) d'un compresseur (7) ou la section transversale d'une soupape d'étranglement est modifiée pour régler la quantité de gaz naturel à travers la conduite d'arrivée de gaz naturel (6).

**5.** Procédé d'actionnement de systèmes à cellules de combustible équipés de reformeurs (1) contenant un catalyseur selon l'une quelconque des revendications 1 à 4, **caractérisé en ce que**, lors de l'arrivée d'eau et d'air à travers la conduite d'arrivée d'eau (14) et la conduite d'arrivée d'air (11) dans le reformeur (1), la quantité d'air à travers la conduite d'arrivée d'air (11) est d'abord réduite puis la quantité d'eau est réduite seulement si l'arrivée d'air dans la conduite d'arrivée d'air (11) est complètement terminée.

**6.** Procédé d'actionnement de systèmes à cellules de combustible équipés de reformeurs (1) contenant un catalyseur selon l'une quelconque des revendications 1 à 4, **caractérisé en ce que** la proportion de gaz liquide dans la conduite d'arrivée de gaz naturel (6) est calculée à partir du signal du capteur d'oxygène (9) et **en ce que** l'arrivée d'eau, d'air et de gaz naturel à travers la conduite d'arrivée d'eau (14), la conduite d'arrivée d'air (11) et la conduite d'arrivée de gaz naturel (6) dans le reformeur (1) est réglée de telle sorte que la température du processus dans le reformeur (1) ne varie pas.

**7.** Procédé d'actionnement de systèmes à cellules de combustible équipés de reformeurs (1) contenant un catalyseur selon l'une quelconque des revendications 1 à 6, **caractérisé en ce que** le capteur d'oxygène (9) est un capteur Nernst.

**8.** Procédé d'actionnement de systèmes à cellules de combustible équipés de reformeurs (1) contenant un catalyseur selon l'une quelconque des revendications 1 à 7, une désulfuration du gaz chaud étant mise en place avec l'arrivée de gaz contenant de l'oxygène dans la conduite d'arrivée de gaz naturel (6), **caractérisé en ce que** la proportion de gaz contenant de l'oxygène est ajustée dans l'arrivée de désulfuration de gaz chaud en fonction du signal du capteur d'oxygène (9).

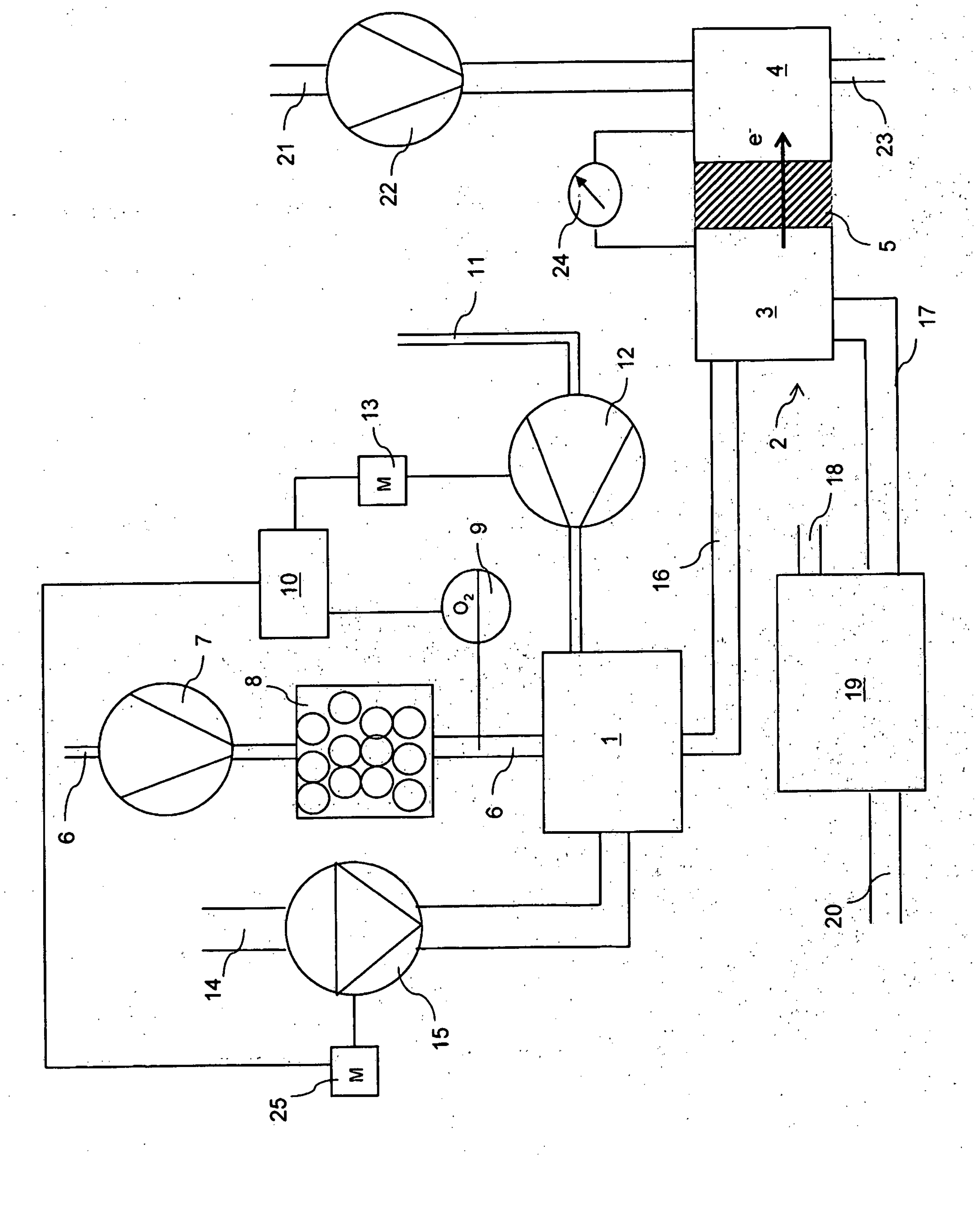
1
2
3
4
5
6
7
8
9
O2
10
11
12
13
M
14
15
16
17
18
19
20
21
22
23
24
e-
25
M

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20070180769 A